# EUROPEAN PATENT APPLICATION

(11) **EP 1 521 473 A2**
(43) Date of publication of application: **06.04.2005**
(21) Application number: 04022530.2
(22) Date of filing: 22.09.2004
(51) Int. Cl.: H04N 7/24, H04N 7/26

(54) **URI pointer system and method for the carriage of MPEG-4 data in a DVB-MHP MPEG-2 transport stream**

(30) Priority: 25.09.2003 US 670949; 20.10.2003 US 689444
(71) Applicant: Sharp Kabushiki Kaisha, Osaka-shi Osaka (JP)
(72) Inventor: Liang, Kai-Chieh, Huntington Beach CA 92647 (US)
(74) Representative: Müller - Hoffmann & Partner

(57) **Abstract**

Systems and methods are provided for the broadcast and receiving of MPEG-4 data resources in a European DVB network. The receiving method comprises: at a DVB-Multimedia Home Platform (MHP) terminal, receiving an MPEG-2 TS, with a packetized DSM-CC U-U OC; locating a URI in the TS; in response to the URI, accessing an address in the DSM-CC U-U OC; in response to accessing the address, retrieving MPEG-4 resources from the DSM-CC U-U OC; and, decoding the MPEG-4 resources. A lid URI provides a binding name and access scheme to the objects in the DSM-CC U-U OC, as prescribed and restricted by MHP protocols (MHP OC). That is, a lid URI is embedded in an Initial Object Descriptor (IOD) to locate resources in the MHP OC such as a BIFS scene description stream or an object descriptor stream.

## Description

### BACKGROUND OF THE INVENTION

### 1. Field of the Invention

This invention generally relates to digital image and data transport processes and, more particularly, to a uniform resource identifier (URI) system and method for carrying MPEG-4 data in a European Digital Video Broadcasting MPEG-2 transport stream (TS).

### 2. Description of the Related Art

Digital video broadcasting systems, such as European Digital Video Broadcasting (DVB) and American Advanced Television Systems Committee (ATSC), are based on the common MPEG-2 coding systems. MPEG-2 offers features such as high-definition video, multiple-channel audio, and even the exciting new multimedia data and interactive services.

ISO and IEC have jointly developed ISO/IEC 14496 MPEG-4 as the next generation audiovisual standard. MPEG-4 provides better compression efficiency than MPEG-2 and new features such as audiovisual interactivities, Copyright Protection, and other features that can enhance digital television broadcasting and enable new applications. The harmonization between MPEG-2 based broadcasting standards, such as DVB, and MPEG-4 technologies is important for the enhancement of future digital television broadcasting. The harmonization of the MPEG-2 broadcasting and MPEG-4 standards must include the harmonization of layers, such as transport layer and application layer.

Transport layer harmonization is the foundation of this effort. Specifically, a means must be found to enable the carriage of MPEG-4 data elements, including scenes and associated streams, by the MPEG-2 broadcasting specified transport layer protocols. The MPEG-2 broadcasting system, such as Europe DVB or American ATSC, has defined transport protocols including MPEG-2 Transport Stream, DSM-CC Data Carousel, DSM-CC User-to-User (U-U) Object Carousel, and Internet Protocol, to name a few. MPEG-2 Transport Stream is the foundation layer for most of the other protocols. Thus, carriage of MPEG-4 data using MPEG-2 transport is an important issue to solve.

ISO/IEC has specified the method for carriage of MPEG-4 content on MPEG-2 transport stream (known as 4on2) in the specification of ISO/IEC 13818-1. MPEG-4 contents consist of an initial object descriptor and a variable number of streams, such as object descriptor stream, scene description streams, audio streams, video streams, and IPMP streams. The specification (ISO/IEC 13818-1) requires that each of the MPEG-4 streams be contained in an SL-packetized stream and may optionally be multiplexed into a FlexMux stream, both defined in ISO/IEC 14496-1. The SL-packetized streams or FlexMux streams are then encapsulated either in MPEG-2 Packetized Elementary Stream (PES) packets or in ISO_IEC_14496_sections prior to Transport Stream packetization and multiplexing.

ISO/IEC 13818-1 specifies the encapsulation and signaling approaches for the ISO/IEC 14496 audiovisual scenes and associated streams carried in ISO/IEC 13818-1 transport stream. The procedure is summarized as follows:

MPEG-4 content associated with a program carried in the transport stream shall be referenced in the Program Map Table of that program. Program Map Table is shown in Table 1.

An initial object descriptor (IOD) shall be used to define the ISO/IEC 14496-1 scene. The initial object descriptor, which serves as the initial access point to all associated MPEG-4 streams, shall be conveyed in the IOD descriptor located in the descriptor loop immediately following the program_info_length field in the Program Map Table of the program to which the scene is associated.

The IOD contains ES_Descriptors identifying the scene description and object descriptor streams that form the program. It may also contain ES_Descriptors identifying one or more associated IPMP or OCI streams, for example.

Elements of ISO/IEC 14496 content may be conveyed in one or more ISO/IEC 13818-1 MPEG-2 program elements referenced by a unique PID value within a Transport Stream.

Carriage of ISO/IEC 14496 content in a PID is signaled by a stream_type value of 0x12 or 0x13 in the Program Map Table in association with that PID value.

The SL descriptor and the FMC descriptor shall be used to specify the ES_ID for each encapsulated ISO/IEC 14496 stream.

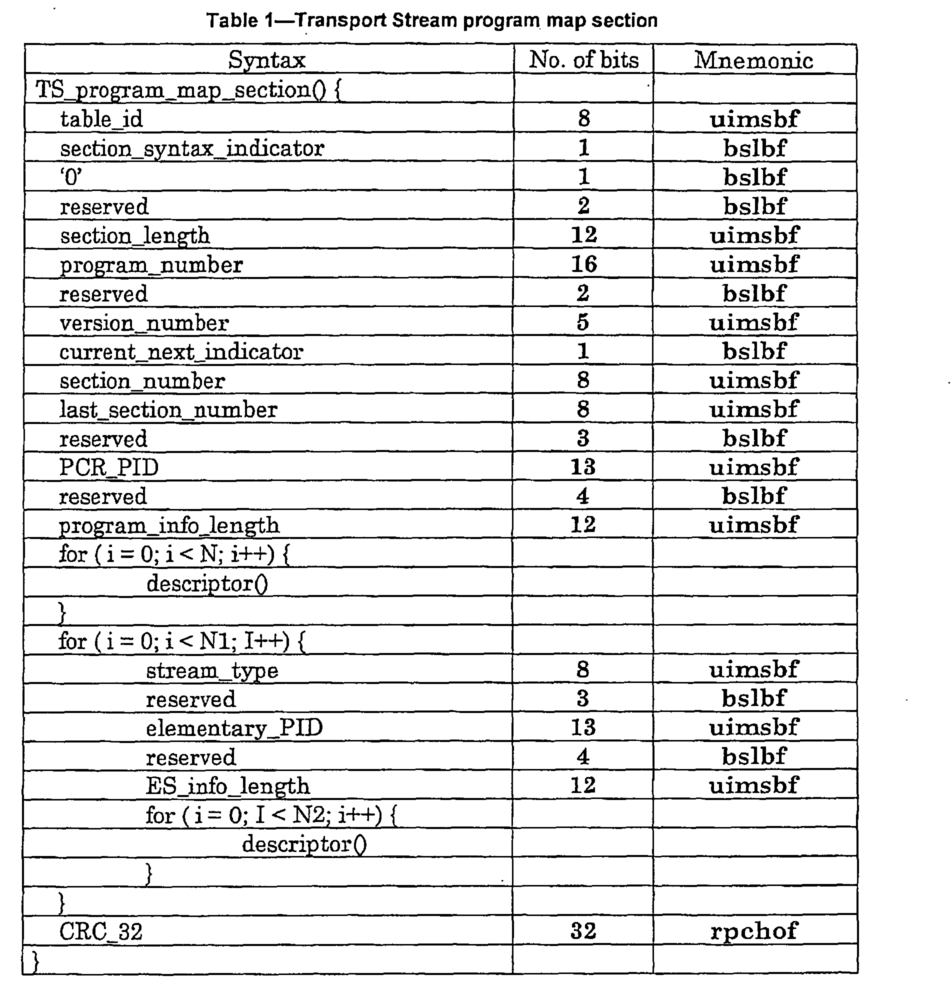

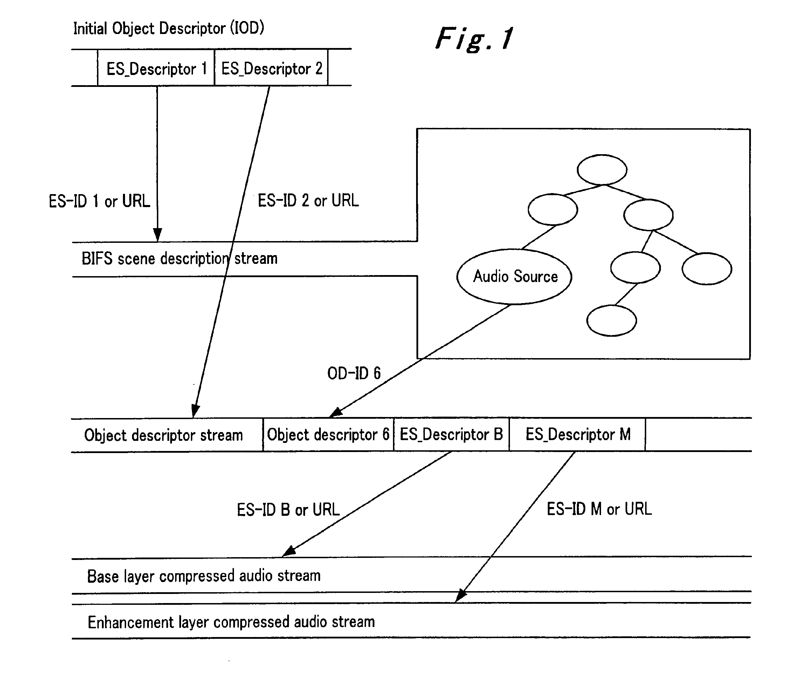

Fig. 1 is a diagram illustrating procedures for playing MPEG-4 content (prior art). Following the specification of ISO/IEC 13818-1, the procedures for playing MPEG-4 content received from a 13818-1 transport, as described above, is described as follows:
1. Obtain the initial object descriptor (IOD), which contains the ES_Descriptors for the BIFS scene stream, object descriptor streams, etc.
2. The BIFS ES_Descriptor contains the ES_ID and an optional Universal Resource Locator CURL) for the BIFS stream to retrieve. Accordingly, there are two ways to retrieve the BIFS streams:
   a. Use the ES_ID, which serves as a unique label for the elementary stream within its name scope, and the SL_Descriptor, which contains the PID for the ES_ID. The BIFS stream can be retrieved from the packets associated with the PID.
   b. Alternatively, if the ES_Descriptor contains an URL, the BIFS stream can be retrieved from the location specified by the URL. The retrieved stream is then associated with the ES_ID.
3. Repeat Step 2 for the object descriptor stream.
4. Compose the BIFS scene using the retrieved BIFS stream.
5. Some BIFS nodes are associated to the corresponding elementary streams resources via object descriptors. The association is established by means of the objectDescriptrorID in the object descriptor.
   a. Use the objectDescriptorID to locate the object descriptor in the object descriptor stream.
   b. The object descriptor shall contain the ES_Descriptor for the elementary stream.

Repeat Step 2, i.e. use the ES_ID or URL, to retrieve the elementary stream.

Due to the complexity of the specified ISO/IEC methodology, there is not yet a valid and complete implementation available for the carriage of MPEG-4 Systems on the MPEG-2 transport. Thus, there is a need to define a new method for delivery of MPEG-4 content based upon MPEG-2 transport protocols.

It would be advantageous if a means could be developed for carrying MPEG-4 data in an MPEG-2 TS using existing DVB methodologies.

### SUMMARY OF THE INVENTION

The present invention defines a new method for the carriage of MPEG-4 data in an MPEG-2 TS based upon uniform reference indicator URI and a DSM-CC User-to-User (U-U) Object Carousel (OC). While a uniform reference locator (URL) reference is defined in the ISO/IEC 13818-1 specification as an alternative approach for transmitting MPEG-4 data, no specific means for using an URL is defined in the specification. This invention defines the means and proposes a solution fully compliant with the ISO/IEC 13818-1 standard. The solution is flexible and effective in downloading and associating the MPEG-4 components in a MPEG-2 broadcasting infrastructure. Furthermore, the original ISO/IEC method and the newly invented method can be used simultaneously. The receiver can also choose to cache the downloaded data to speed up the acquisition process and improve the reuse of data.

In a summary, the present invention harmonizes the MPEG-2 and MPEG-4 standards, enabling an approach to carry MPEG-4 data, including scenes and associated streams, using the MPEG-2 OC transport protocol.

Accordingly, a method is provided for receiving of MPEG-4 data resources broadcast in a European DVB network. The method comprises: at a DVB-Multimedia Home Platform (MHP) terminal, receiving an MPEG-2 TS, with a packetized DSM-CC U-U OC; locating a URI in the TS; in response to the URI, accessing an address in the DSM-CC U-U OC; in response to accessing the address, retrieving MPEG-4 resources from the DSM-CC U-U OC; and, decoding the MPEG-4 resources.

With respect to accessing an address, a lid URI provides a binding name and access scheme to the objects in the DSM-CC U-U OC, as prescribed and restricted by MHP protocols (referred to herein as MHP OC). That is, a lid URI is embedded in an Initial Object Descriptor (IOD) to locate resources in the MHP OC such as a BIFS scene description stream or an object descriptor stream. The MPEG-4 resources are formed in a hierarchical directory structure of BIOP objects including a DSM::ServiceGateway, a DSM::Directory, DSM::Stream, and a DSM::File.

Additional details of the above-described method, a broadcasting method, as well as corresponding receiver and broadcasting systems, are provided below.

### BRIEF DESCRIPTION OF THE DRAWINGS

Fig. 1 is a diagram illustrating procedures for playing MPEG-4 content (prior art).
Fig. 2 is a schematic block diagram of the present invention European Digital Video Broadcasting (DVB) Multimedia Home Platform (MHP) terminal for receiving broadcast MPEG-4 data resources.
Fig. 3 is a diagram depicting a procedure for accessing MPEG-4 resources using lid URIs.
Fig. 4 is a diagram depicting the BIOP Directory and File Objects.
Fig. 5 is a diagram illustrating a simple MHP OC file structure.
Fig. 6 is a diagram depicting an exemplary MHP OC file directory.
Fig. 7 is a schematic block diagram of the present invention European Digital Video Broadcasting (DVB) system for transmitting MPEG-4 resources.
Fig. 8 is a flowchart of the present invention method for the receiving MPEG-4 resources broadcast in a European Digital Video Broadcasting (DVB) network.
Fig. 9 is a flowchart illustrating the present invention method for broadcasting pointers to MPEG-4 data in a European Digital Video Broadcasting (DVB) network.

### DETAILED DESCRIPTION OF THE PREFERRED EMBODIMENTS

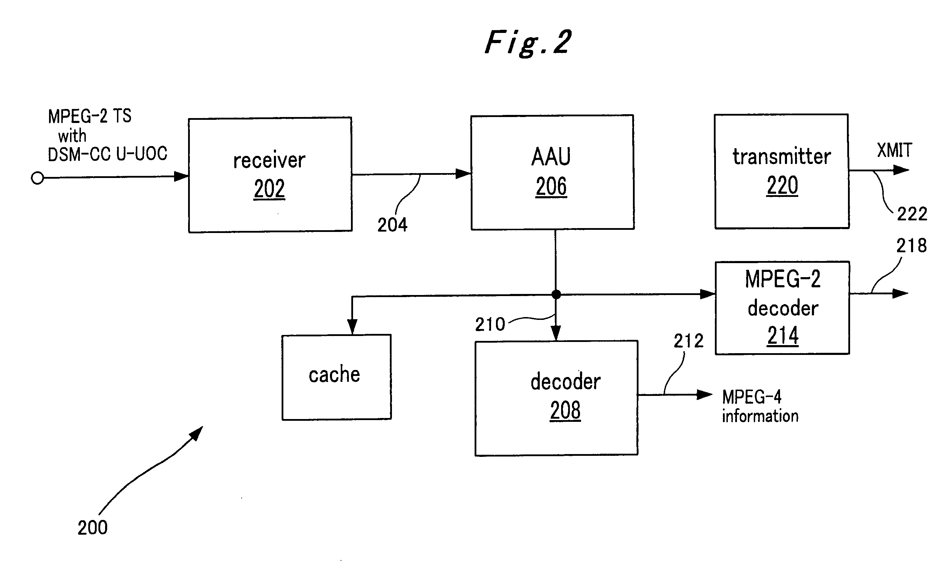

Fig. 2 is a schematic block diagram of the present invention European Digital Video Broadcasting (DVB) Multimedia Home Platform (MHP) terminal for receiving broadcast MPEG-4 data resources. The system 200 comprises a receiver 202 having an interface on line 204 for accepting an MPEG-2 TS with an embedded URI, as well as a packetized DSM-CC U-U OC. Note, that although the drawing implies a single TS, multiple TSs may be received. Also note that the URI is typically not embedded in the DSM-CC U-U OC. An address access unit 206 has an interface on line 204 to accept the MPEG-2 TS from the receiver 202. The address access unit 206 (AAU) locates a URI in the TS, accesses an address, and retrieves MPEG-4 resources from the DSM-CC U-U OC. A decoder 208 has an interface connected to the address access unit 206 on line 210 for receiving the MPEG-4 resources and an interface on line 212 for supplying the decoded MPEG-4 information.

In the context of this invention, the address access unit 206 locates a URI such as an http address or a local identifier (lid). Typically, lid addresses are accessed. However, it is possible to use an http address as a lid. That is, an http can be used to access a file in the DSM-CC U-U OC, if the file is indexed with an http address. One advantage of using an http address as a lid address, is that the system 200 may choose to access a website for example, as a backup if, for some reason, the DSM-CC U-U OC is not available or convenient.

When the URIs are formed, they are embedded into an MPEG-2 TS. These formed URIs are used to construct the MPEG-4 system. An MPEG-4 system may also include an interactive scene with all kinds of pointers, such as URIs, to various audio/video/graphic objects (resources). The URI can reference resources (audio, video, system data) already in the cache, embedded in the broadcast transport using DSM-CC U-U OC, or located at a remote site.

A codec system usually includes the system data, video, and audio resources. In MPEG-4, the systems data part is used to build up an interactive audiovisual scene. The scene consists of many objects (of different shapes) such as audio, video, graphics, html, etc. An example is a house scene consisting of a sofa object, chair objects, and table object. An MPEG-4 system is needed even if the scene includes only 1 object, as the MPEG-4 system is used to build an interactive scene.

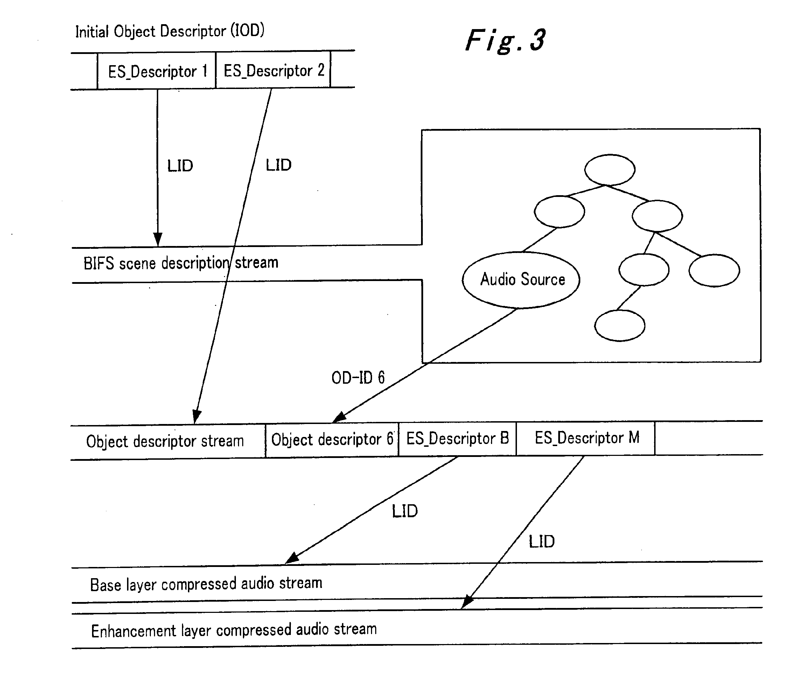

Fig. 3 is a diagram depicting a procedure for accessing MPEG-4 resources using lid URIs. The lid URI provides a binding name and access scheme to objects in the DSM-CC U-U OC, as prescribed and restricted by MHP protocols, which shall be referred to wherein as MHP OC. More specifically, the address access unit uses a lid URI embedded in an Initial Object Descriptor (IOD) to locate resources in the MHP OC. A BIFS scene description stream and an object descriptor stream are shown being accessed.

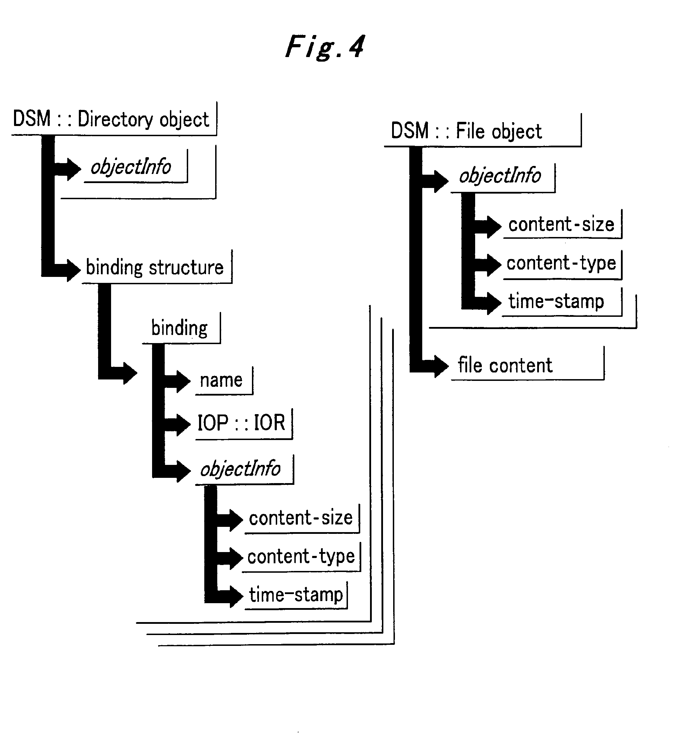

Fig. 4 is a diagram depicting the BIOP Directory and File Objects. As can be seen from the figure, the address access unit accesses MPEG-4 resources in a hierarchical directory of broadcast Inter-Object Request Broker Protocol (BIOP) objects including a DSM::ServiceGateway, a DSM::Directory, a DSM::Stream, and a DSM::File.

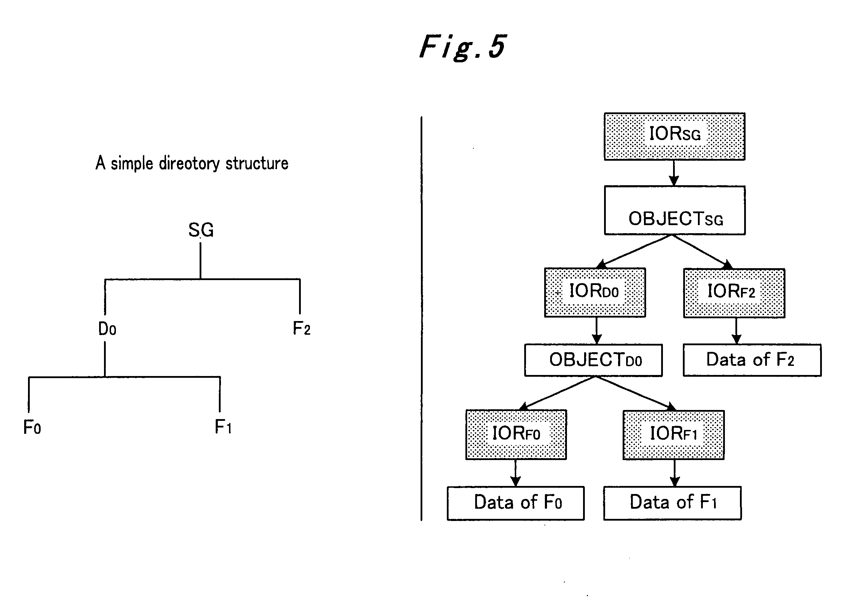

Fig. 5 is a diagram illustrating a simple MHP OC file structure. It should be noted that SG is Service Directory, D is Directory, S is Stream, and F stands for file. The address access unit retrieves MPEG-4 resources from the MHP OC as follows. First, a DSI message is located. DSI stands for DownloadServerInitiate(). It is a message used by DSM-CC OC to broadcast the IOR (a kind of pointer) of the Service Gateway (the root directory of the file system). Then, the interoperable object reference (IOR) for the Service Gateway is extracted. When the IOR of the SG is extracted from the DSI, the SG can be located and retrieved. The Service Gateway object is parsed, and IORs for Directory, Stream, and File objects are extracted from the Service Gateway binding structure. Finally, MPEG-4 resources are acquired from the File and Stream objects.

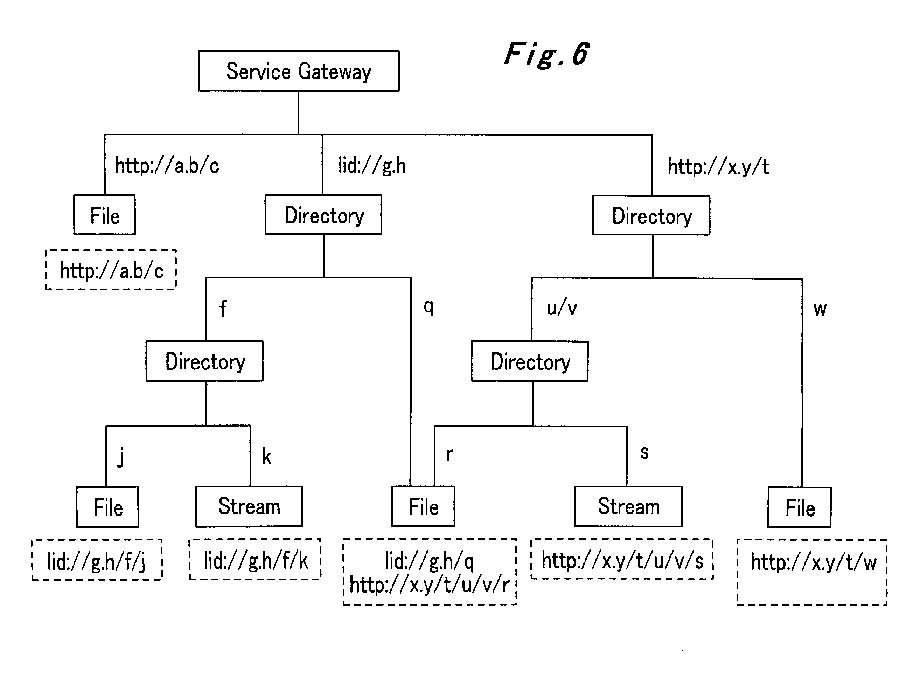

Fig. 6 is a diagram depicting an exemplary MHP OC file directory.

Returning to Fig. 2, the address access unit 206 retrieves MPEG-4 resources form the MHP OC that include audio, video, and systems data. These resources permit the decoder 208 to supply MPEG-4 information such as enhanced audio data in the MPEG-2 TS and/or enhanced video data in the MPEG-2 TS. The systems data can be used to establish an interactive audiovisual scene and communication link.

It should be understood that the URI and MPEG-4 resources need not necessarily be carried in the same TS. In some aspects, the receiver 202 receives a first MPEG-2 TS and a second MPEG-2 TS with a packetized MHP OC. The address access unit 206 retrieves the lid URI from the first MPEG-2 TS, and retrieves MPEG-4 resources from the MHP OC in the second MPEG-2 TS. It should also be understood that the first and second TSs need not be received simultaneously. In other aspects, both TSs carry packetized MHP OCs with embedded MPEG-4 resources. Then, URIs in the first TS can be used to retrieve MPEG-4 resources in both the first and second TSs.

In other aspects, the system 200 further comprises a transmitter 220 having a transmit interface on line 222. The transmitter 220 and receiver 202 can be used to form an interactive audiovisual scene and communication link in response to decoding MPEG-4 systems data.

In one aspect, the system further comprises a local cache 224 have an interface on line 210 to receive retrieved MPEG-4 resources from storage. These resources can be accessed using URIs in subsequently received TSs, or subsequently received URIs in the same TS. For example, the address access unit 206 may access a local cache address or a Web protocol identifier, instead of, or in addition to, the lid address. Then, MPEG-4 resources can be retrieved from the local cache 224 in response to accessing the local cache address. Processing resources can be conserved if the AAU 206 does not have to build the entire directory every time new MHP OC data is received in a TS. Alternately, a Web protocol identifier or http address can be used to access MPEG-4 resources from a network-connected website.

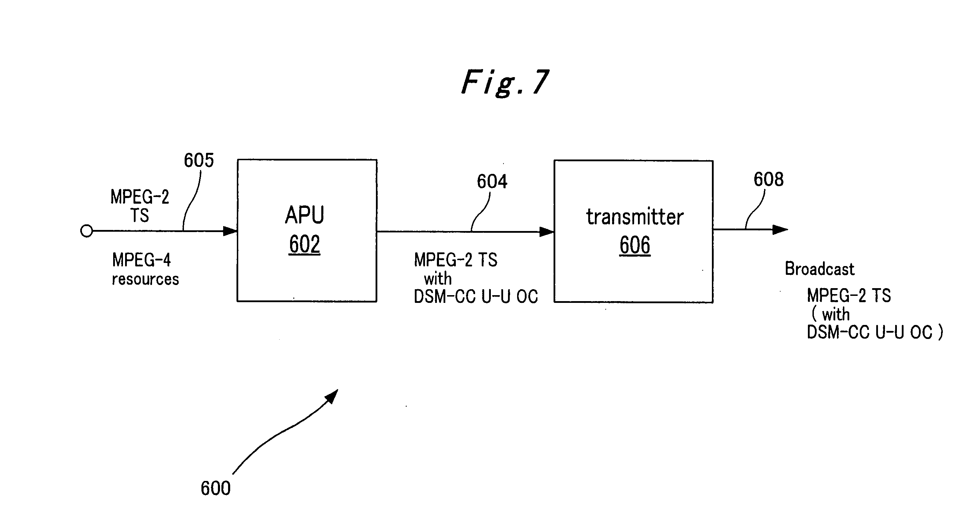

Fig. 7 is a schematic block diagram of the present invention European Digital Video Broadcasting (DVB) system for transmitting MPEG-4 resources. The system 600 comprises an address pointer unit (APU) 602 having an interface on line 604 to supply an MPEG-2 TS with URIs for accessing MPEG-4 resources embedded in an DSM-CC U-U OC, and to supply a MPEG-2 TS with the packetized DSM-CC U-U OC. The APU 602 receives an encoded MPEG-2 TS and MPEG-4 resources on line 605. In some aspects, the same TS carries both the URIs and DSM-CC U-U OC. A transmitter 606 has an interface on line 604 to accept the MPEG-2 TS, with the packetized DSM-CC U-U OC from the address pointer unit 602. The transmitter 606 has an interface on line 608 to broadcast the MPEG-2 TS.

The APU 602 supplies an MPEG-2 TS with either an http address or a lid URI. As mentioned above, in some aspects the http address can be used as a lid to access MPEG-4 resources in the DSM-CC U-U OC (if the resource file is labeled appropriately). Thus, the APU 602 generates a lid URI to supply a binding name and access scheme to objects in the DSM-CC U-U OC, as constrained and proscribed by MHP protocols (MHP OC). That is, the APU 602 generates a lid URI embedded in an Initial Object Descriptor (IOD) to locate either BIFS scene description stream and/or object descriptor stream resources in the MHP OC (see Fig. 3).

The APU 602 embeds MPEG-4 resources in an MHP OC by forming the MPEG-4 resources in a hierarchical directory structure of BIOP objects including a DSM::ServiceGateway, a DSM::Directory, DSM::Stream, and a DSM::File (see Fig. 4). The APU 602 embeds MPEG-4 resources in the MHP OC as follows: MPEG-4 resources are loaded into Stream and File objects; IORs for Directory, Stream, and File Objects are created; the IORs are bound in a Service Gateway; an IOR is created for the Service Gateway; and, the Service Gateway IOR is located in a DSI message (see Fig. 5).

Typically, the APU 602 embeds MPEG-4 resources in an MHP OC such as audio, video, and systems data. In some aspects, the APU 602 locates a lid URI in a first MPEG-2 TS and embeds MPEG-4 resources in an MHP OC packetized in a second MPEG-2 TS. Then, the transmitter 608 broadcasts the first and second MPEG-2 TSs. As noted above, the transmitter 608 need not necessarily broadcast the first and second TSs simultaneously. Further, the URIs in the first TSs may point to resources in more than one TS (with packetized MHP OC).

In another aspect, the APU 602 generates additional URI addresses embedded in the MPEG-2 TS, such as http and local (receiver) cache addresses, for accessing MPEG-4 resources from a website and a local (receiver) cache, respectively.

### Functional Description

Returning to Fig. 3, although not shown, it should be noted that an object descriptor may have an optional URI (for example, a lid address) pointing to another object descriptor elsewhere. The new object descriptor would be referenced and associated with the objectDescriptorID of the original object descriptor carrying the URI string. The technique is applicable to both elementary stream and object descriptor.

As explained above, the two MPEG-4 standard-compliant approaches for retrieving elementary streams are: (1) via the ES_ID and the associated PID for the data carried in the transport packets; and, (2) via URI to reference streams carried elsewhere, such as over an IP network. The present invention defines a URI pointer means complaint with the ISO/IEC 13818-1 specification. The invention uses an Object Carousel to deliver MPEG-4 program elements in an organized set and forms a transport file system. One example of an OC is the DSM-CC OC. The invention associates a unique label (URI address) for each of the MPEG-4 resource being transmitted in the file system. Then, the URI address (pointer) and the file structure are used to retrieve the transmitted MPEG-4 elements.

ISO/IEC 13818-6 DSM-CC U-U Object Carousel is one of the transport protocols specified for use with MPEG-2 broadcasting systems such as DVB-MHP. It provides a standard mechanism to transmit a collection of U-U Objects (e.g. directories, files, streams, etc) in a broadcast network. The set of U-U Objects jointly form a hierarchical transport file system, which is used in this invention as the method to deliver the MPEG-4 data, such as scenes and/or streams, in an MPEG-2 network.

Each instance of a U-U Object Carousel represents a particular Service Domain and is uniquely identified by an identifier called Carousel NSAP address (as defined in the ISO/IEC 13818-6 specification). Each Service Domain has a Service Gateway to provide the root Directory of the file system. To support such a Service Domain, DSM-CC uses a protocol called Broadcast Inter-ORB Protocol (BIOP), which consists of three important parts as the follows:

**BIOP Profile Body definition**. BIOP defines a Profile Body that is used to construct a unique object reference for each object that is broadcast in the network. The BIOP object references uses the Inter-operable Object Reference (IOR) format defined by the CORBA (Common Object Request Broker Architecture) standard. Each IOR contains a BIOPProfileBody as defined in ISO/IEC 13818-6. It carries all the information pertaining to an object that is needed to uniquely identify the object and locate it within a Service Domain specified by an NSAP address.
- **BIOP Message Formats.** U-U Object Carousels broadcast the U-U objects in so-called BIOP messages. Each supported U-U object is encoded in a dedicated BIOP message that is built from a generic message format. The BIOP message formats are detailed below.
- **BIOP Transport definition.** To facilitate access to the U-U objects in broadcast networks, the BIOP messages have to be broadcast repetitively in the broadcast network. The U-U Object Carousel protocol is, therefore, based on the Data Carousel scenario of the U-N Download protocol, which implements the functionality. The BIOP messages are carried in the Modules of the Data Carousel. The Modules are fragmented into Blocks (as defined by U-N Download) and are transported in **DownloadDataBlock()** messages. The associated delivery parameters of the Module (moduleSize, blockSize, Time-outs) are specified in the associated **DownloadlnfoIndication() (DII)** messages. The U-U Object Carousel uses the **DownloadServerInitiate() (DSI)** messages of U-N Download to broadcast the IOR of the Service Gateway of the carousel.

### DSM-CC BIOP Messages

DSM-CC U-U Object Carousel use four types of U-U Objects: **DSM::ServiceGateway, DSM::Directory, DSM::Stream, and DSM::File.** Each kind of U-U Object is encoded in a dedicated type of BIOP message. Namely, BIOP defines four messages:
1. **ServiceGateway message.** The ServiceGateway message is used to convey a U-U object of the type ServiceGateway. It contains references to other Directory, File, Stream, and ServiceGateway objects. There is no more than one ServiceGateway message in one U-U Object Carousel.
2. **Directory message.** The Directory message is used to convey a U-U object of the type Directory. It contains references to other Directory, File, Stream, and ServiceGateway objects.
3. **File message.** The file message is used to convey a U-U object of the type File. It contains just the data of the file.
4. **Stream message.** The Stream message is used to convey a U-U object of the type Stream. It contains a reference to the stream in the broadcast network.

### DSM-CC BIOP Generic Message Format

All the four types of BIOP messages are derived from a generic object format, which is used to encapsulate the data and attributes of a single object. The message consists of a header, a subheader, and a message body. The syntax and semantics of the generic object message format are defined in the ISO/IEC 13818-6 specification and is duplicated below for reference.

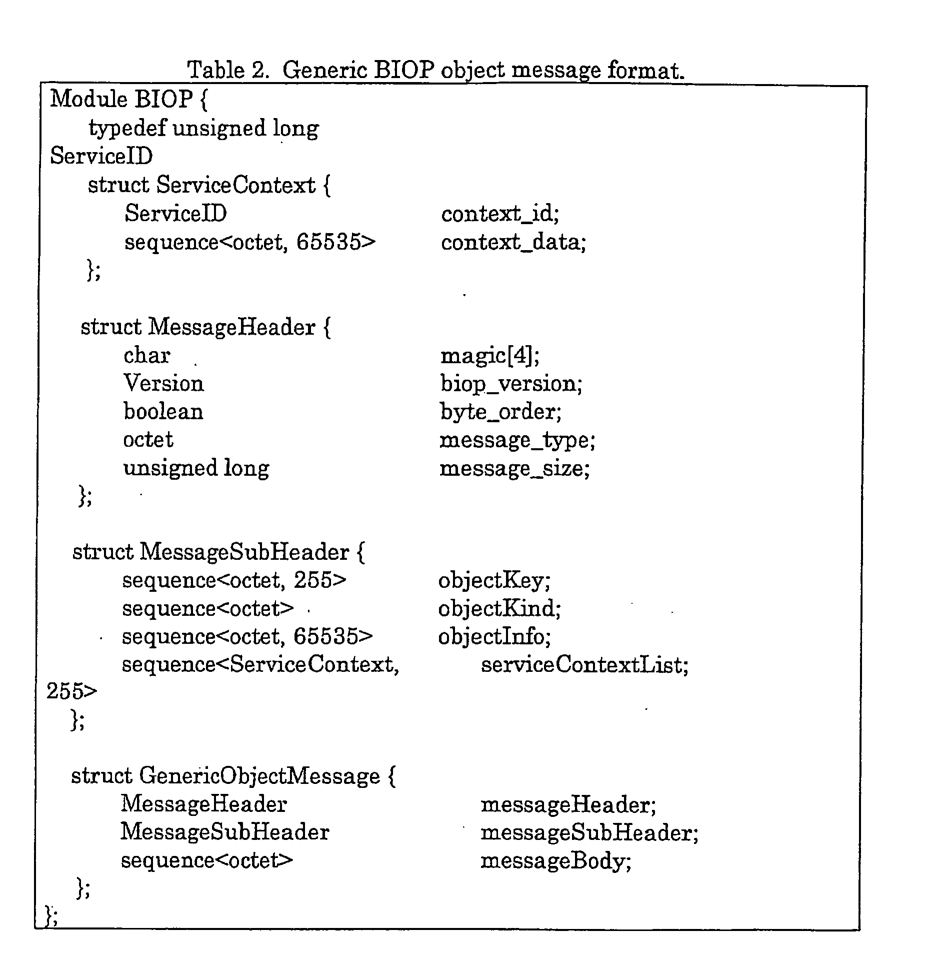

The semantics of the fields of the BIOP::MessageHeader are explained as follows:
- The **magic** field identifies the **BIOP** message. The value of this field is always ''**BIOP**'' encoded in ISO Latin-1.
- The **biop_version** field contains the version number of the BIOP protocol used in this message.
- The **byte_order** field indicates the byte ordering used for the following subsequent elements of the message (including message_size). A value of FALSE (0) indicates big-endian byte ordering, and TRUE (1) indicates little-endian ordering.
- The **message_type** field indicates the type of the message. The value of this field shall be set to 0x00. The values in the range from 0x01 to 0xFF are reserved for ISO/IEC 13818-6.
- The **message_size** field contains the length of the message following the message header in bytes. The count includes any alignment gaps that may be introduced by the data encoding standard.

The semantics of the fields BIOP::MessageSubHeader are as follows:
- The **objectKey** field identifies the object that is conveyed in this message. The value of the objectKey is only meaningful to the Broadcast Server and is not interpreted by the Client.
- The **objectkind** field identifies the kind of the object that is conveyed in the message. The value of the objectKind defines the syntax and semantics of the **objecctInfo** field and the messageBody field.
- The **objectInfo** field contains some or all of the attributes of this object. The syntax and semantics of this field are dependent of the value of the **objectKind** field.
- The **serviceContext** field contains **ORB** service data that is passed from the Broadcast Server to the Client. The use of this field is outside the scope of the ISO/IEC 13818-6 specification.

The semantics of the **messageBody** field are as follows:
- The syntax and semantics of the **messageBody** field are dependent of the value of the **objectKind** field.

### DSM-CC BIOP Directory Message

To instantiate the generic object message format into a dedicated object message, the semantics of the **objectInfo** and **messageBody** fields have to be defined. The objectInfo field is intended to carry the attributes of the object, while the messageBody is intended to carry the data of the object. The following rules define the instantiation of the BIOP Directory message:
1. The **objectKind** field shall contain the string **"DSM::Directory" or "dir".**
2. The **messageBody** field shall contain the **BIOP::DirectoryMessageBody** structure. The syntax and semantics of the **BIOP::DirectoryMessageBody** are defined below.

The **BIOP::DirectoryMessageBody** structure consists of a loop of Bindings. A binding correlates an object name (i.e. bindingName) to an **IOR** and provides additional information about the object. The **IOR** must include the **BIOP Profile Body** when the referenced object belongs to the Carousel. The semantics of the **BIOP::DirectoryMessageBody** are defined below:
- The **bindingName** field (i.e. **id** and **kind)** contains the path specification of the object.
- The **bindingType** field indicates the type of the object binding. Binding can either be of type '**nobject**' when the name is not bound to a Directory or '**ncontext**' when the name is bound to a Directory object. '**composite**' is defined for compatibility with the User-to-User Composite bindings.
- The **objectRef** field contains the **IOR** of the object.

The **objectInfo** field may contain some of the attributes of the bound object as well as user private information about the object. If attributes of the bound object are carried in this field they shall be the first structures that are encapsulated in this field.

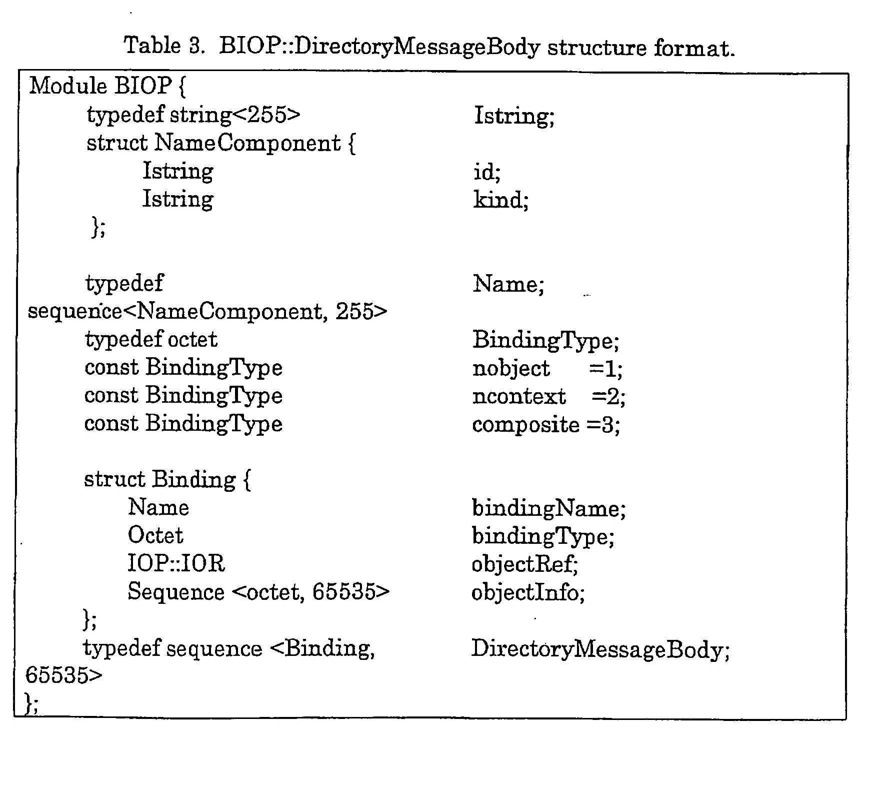

### DSM-CC BIOP File Message

The BIOP File message is an instantiation of the generic object message format. The following rules define this object instantiation:
1. The **objectKind** field shall contain the string "**DSM::File**" or "**fil**".
2. The messageBody field shall contain the **BIOP::FileMessageBody** structure. The syntax and semantics of the **BIOP::FileMessageBody** are defined below. The **FileMessageBody** field in the table contains the file data as an octet stream.

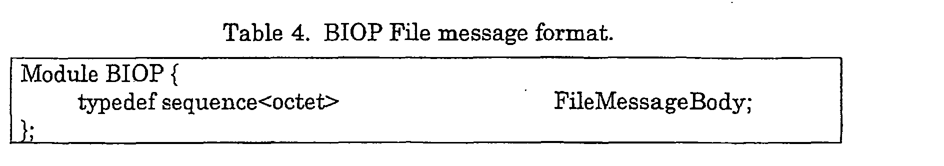

### DSM-CC BIOP Stream Message

The BIOP Stream message is an instantiation of the generic object message format. The following rules define this instantiation:
1. The **objectKind** field contains the string **"DSM::Stream" or "str".**
2. The **messageBody** field contains the **BIOP::StreamMessageBody** structure. The syntax and semantics of **the BIOP::StreamMessageBody** are defined below.

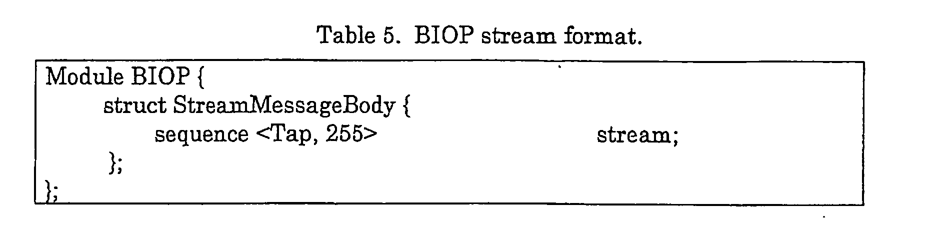

The **BIOP::StreamMessageBody** consists a sequence of Taps that are associated with the stream object. Tap is a structure which BIOP use to achieve network independence. A Tap is basically a reference to a particular network connection by an association tag. The stream field contains one or more Taps associated with the stream object.

### DSM-CC BIOP Service Gateway Message

The BIOP Service Gateway message is an instantiation of the generic object format. The following rules define this instantiation:
1. The **objectKind** field shall contain the string "**DSM::ServiceGateway**" or "**srg**".
2. The **messageBody** field shall contain the **BIOP::DirecotryMessageBody** structure as described in Table 3.

### Summary of DSM-CC BIOP Messages

**DSM::Directory and DSM::File** are shown in Fig. 5 as an example. Each BIOP object has its unique object key and type information (directory, file, stream, or service gateway) in the header. It also has an additional **objectInfo** structure giving information such as file size, content-type (MIME type), time stamp, etc, depends on the type of the BIOP object. The body of a **DSM::File** object is the file content. The body of a **DSM::Directory** object consists of a list of bindings. As explained above, a binding contains a binding name, the object type of the referenced object (directory, file, stream, or service gateway), and an IOR, which gives the location of the referenced object.

A special note about the **DSM::ServiceGateway** object, it is similar to DSM::Directory object. The difference is simply in the syntax of the binding name. For a **DSM::ServiceGateway** object, a name is always a base URI; while for a **DSM::Directory** object a name is a relative path. Each U-U Object Carousel has exactly one Service Gateway object that serves as the top-level directory of the DSM-CC U-U Object Carousel. Objects in the DSM-CC U-U Object Carousel can be reached by following a directory path, i.e. a sequence of directory links, starting from the Service Gateway. An object in a DSM-CC U-U Object Carousel may be referenced from multiple directories, so there may be multiple paths from the Service Gateway to an object.

### Transport File System Using DSM-CC U-U Object Carousel

As noted above, Fig. 5 is a diagram illustrating Object Acquisition in a Simple Directory Structure. A broadcasting transport file system can be built based upon the DSM-CC U-U Object Carousel protocol. Fig. 5 illustrates an example of such as file system, and the sequence for acquiring all the objects in a DSM-CC U-U Object Carousel with a simple hierarchical directory structure. Firstly, the IOR of the Service Gateway object is extracted from the DSI message. Given the IOR for the Service Gateway, the Service Gateway object can be parsed from the data module carrying it. From the binding structure inside the Service Gateway object, the IORs for Directory object D0 and File object F2 can be extracted. Given the IOR for F2, the file data for F2 can be acquired from the data module carrying the F2 object. Given the IOR for D0, Directory object D0 can be extracted, from which the IORs for F0 and F1 can be obtained. Similarly, given the IOR for F0 and the IOR for F1, the file data for F0 and F1 can be acquired. Thus, the IORs for objects in the directory structure are acquired in the following sequence: IOR-SG, IOR-D0, IOR-F2, IOR-F0 and IOR-F1. Once an IOR of an object is obtained, the object can then be retrieved from the corresponding data module.

Note that objects of a DSM-CC U-U Object Carousel are usually carried in a single virtual channel. However, it is possible to have bindings that contain references to objects in other DSM-CC U-U Object Carousel that may be in the same or a different virtual channel. When the DSM-CC U-U Object Carousel resides in a different virtual channel, it may or may not be in the same transport stream. Thus, the logical name space of a DSM-CC U-U Object Carousel may span multiple virtual channels and even multiple transport streams. An IOR, which references an object in a different DSM-CC U-U Object Carousel, should identify the DSM-CC U-U Object Carousel containing the object and give the directory path in that DSM-CC U-U Object Carousel that leads from the Service Gateway of that DSM-CC U-U Object Carousel to the object.

In practice, the receiver may choose to cache all or part the directory and file objects in its local storage and set up (URI) indexes to the objects. Then the acquisition of any object can be achieved very quickly from the local memory, without going through the DSM-CC U-U Object Carousel in the broadcasting transport.

### Delivering MPEG-4 Data in a European Digital Video

### Broadcasting (DVB) Network

In the following paragraphs, the use of a Universal (or Uniform) Resource Identifier (URI) is described, for the binding names of the U-U Objects. With an appropriate URI scheme and the U-U Object Carousels, a mechanism can be built for delivering MPEG-4 data in a MPEG-2 based DVB network.

URI, as defined in RFC2396, is a simple, unified and extensible mechanism for identifying a resource. URI is a generic form (superset) of Universal Resource Locator (URL). It is not limited to the existing Internet protocols and can be expanded with new access technology. The ISO/IEC 13818-1 specification uses URL as an alternative, yet undefined, approach for referencing MPEG-4 data elements. This invention expands the URL concept to a more generic URI format for an access framework and broader scope of data reference.

A particular URI called Local Identifier (lid:) is used in this invention. The lid URI scheme, as defined in SMPTE 343M-2002, is designed for identifying resources, e.g. HTML pages and graphics files, which are transmitted through unidirectional means such as television broadcast. By using the lid scheme in the invention, resources, such as MPEG-4 scenes and associated streams, are transmitted and identified in the unidirectional broadcasting channel. There is no need for a return channel to access the resources remotely such as over the Internet. When resolving a lid reference, the receiver may first look for the resource in cache (if cache is used in the receiver). If it is not found, the receiver can just report the resource is not available, or it can wait for the resource to appear in the broadcast stream. The receiver can time out and report the resource is not available, if the resource does not appear after some period of time.

Returning to Fig. 6, the carriage of MPEG-4 data in an MPEG-2 using U-U OC and URI is shown. With the DSM-CC U-U Object Carousel as the transport protocol, and the lid URI to provide the binding name and access scheme of the U-U objects, a mechanism is available for the carriage MPEG-4 data in an MPEG-2 based DVB network. An example of integrating the lid URI with DSM-CC U-U Object Carousel is shown in Fig. 6. A Service Gateway object is shown that contains a list of bindings of absolute URI addresses starting with lid or http schemes. The binding name is shown next to each directory link. The resulting URI associated with each file is shown below the file, which in the present invention is the MPEG-4 data transmitted over the MPEG-2 based DVB network.

Note that the lid URI is the major scheme for referencing resources in the transport. However, other URI schemes, such as the http scheme, may be used in the present invention framework. As shown in Fig. 6, some URI addresses use the http scheme. DCM-CC Object Carousel only requires the binding name of a DSM::ServiceGateway object to be a base (absolute) URI. The base URI can be either a lid or an http, or other possible URI schemes. However, there is some differences in the use and resolution of different URI schemes. A lid URI is used to label a broadcast resource when it is only available in the broadcast stream. An http URI is used to label a broadcast resource when it is also available on a web server. Note that a resource, such as an MPEG-4 stream, can be referenced by multiple URIs, such as http, lid, etc. Meanwhile, a receiver with limited cache space and an Internet connection may cache resources labeled with a lid URI, but not cache resources labeled with an http URI.

### Compatibility of the Invention with the ISO/IEC 13818-1 Defined 4on2 Method

As mentioned previously, ISO/IEC specifies the method for carriage of MPEG-4 content on MPEG-2 transport stream (known as 4on2) in the specification of ISO/IEC 13818-1. The specification (ISO/IEC 13818-1) requires that each of the MPEG-4 streams be contained in an SL-packetized stream and optionally be multiplexed into a FlexMux stream, both defined in ISO/IEC 14496-1. The SL-packetized streams or FlexMux streams are then encapsulated either in MPEG-2 Packetized Elementary Stream (PES) packets or in ISO_IEC_14496_sections, and then encapsulated into MPEG-2 Transport Stream packets. For the MPEG-4 elements, such as streams and/or descriptors, that are not transmitted based on the above-mentioned approach, the specification (ISO/IEC 13818-1) gives an alternative (undefined) approach based on URL reference. The present invention labels these MPEG-4 elements with URI, accessed by Local Identifier (Lid:), and transmits the data by DSM-CC Object Carousels. DSM-CC Object Carousel is also based on the MPEG-2 transport stream. Therefore, MPEG-4 data transmitted by either approach, 4on2 or the present invention method, is carried in the MPEG-2 transport. The two approaches are compatible and can be used simultaneously. In practice, user has the flexibility to decide the transmitting approach based on the nature of the data.

For MPEG-4 program elements of significant size, or of a continuous nature, such as the broadcasting audio and video data, it may be more effective to packetize the data and continuously transmit (stream) the packets following the original ISO/IEC approach. For other type of program elements that are of limited file sizes or do not require the content to be updated frequently, the present invented approach work may be more effect.

To summarize, the present invention approach enables the following MPEG-4 delivery scenarios in a MPEG-2 network:
- Resources may be delivered in the MPEG-2 transport packets of a PID, and be referenced by the associated ES_ID of the PID (original ISO/IEC 13818-1 defined 4on2 approach).
- Resources may be labeled with an URI such as an http address and accessed over the Internet.
- Resources may be labeled with an URI and delivered by DSM-CC U-U Object Carousel. Resources may be delivered in the same or a different DSM-CC U-U Object Carousel in the same virtual channel, or delivered in a DSM-CC U-U Object Carousel of a different virtual channel. When the resources are delivered in a different virtual channel, they may be transmitted in a different transport.
- Resources may be stored or cached in the memory and accessed by URI schemes.

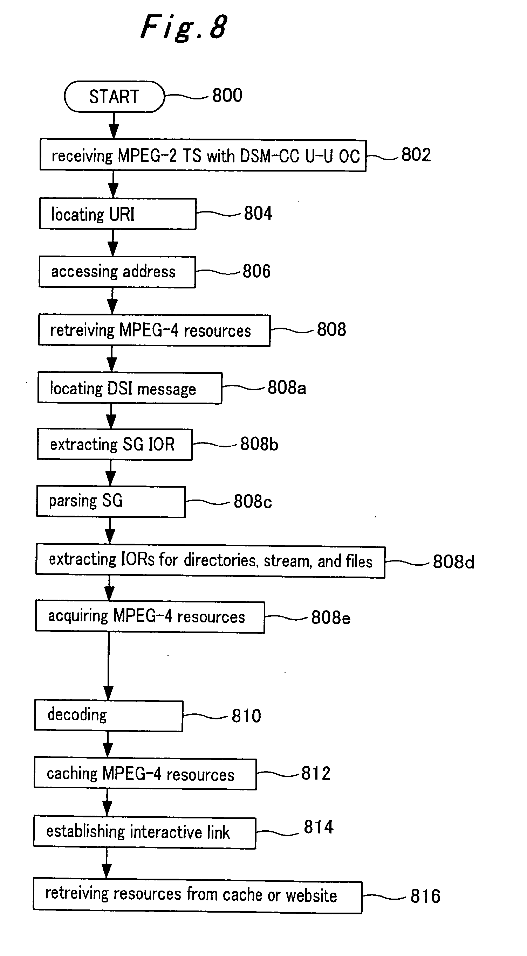

Fig. 8 is a flowchart of the present invention method for the receiving MPEG-4 resources broadcast in a European Digital Video Broadcasting (DVB) network. Although the method is depicted as a sequence of numbered steps for clarity, no order should be inferred from the numbering unless explicitly stated. It should be understood that some of these steps may be skipped, performed in parallel, or performed without the requirement of maintaining a strict order of sequence. The method starts at Step 800.

Step 802 receives an MPEG-2 TS with a packetized DSM-CC U-U OC at a DVB-Multimedia Home Platform (MHP) terminal. Step 804 locates a URI in the TS. Step 806, in response to the URI, accesses an address. Typically, accessing an address in Step 806 includes accessing a local identifier (lid) and/or an http address. Step 808 retrieves MPEG-4 resources from the DSM-CC U-U OC in response to accessing the address. Step 810 decodes the MPEG-4 resources. In one aspect, Step 812 caches the retrieved MPEG-4 resources.

In some aspects of the method, accessing an address in Step 806 includes accessing a lid URI that provides a binding name and access scheme to the objects in the DSM-CC U-U OC, as constrained and proscribed by MHP protocols (MHP OC). More specifically, a lid URI embedded in an Initial Object Descriptor (IOD) is used to locate resources in the MHP OC such as a BIFS scene description stream and/or an object descriptor stream.

Receiving an MPEG-2 TS, with a packetized MHP OC, in Step 802 includes forming MPEG-4 resources in a hierarchical directory structure. That is, a hierarchical directory structure is formed of BIOP objects including a DSM::ServiceGateway, a DSM::Directory, DSM::Stream, and a DSM::File.

In some aspects, retrieving MPEG-4 resources from the MHP OC, in Step 808, includes substeps. Step 808a locates a DSI message. Step 808b extracts the IOR for the Service Gateway. Step 808c parses the Service Gateway object. Step 808d extracts IORs for Directory, Stream, and File objects from the Service Gateway binding structure. Step 808e acquires MPEG-4 resources from the File and Stream objects.

Typically, retrieving MPEG-4 resources from MHP OC in Step 808 includes retrieving MPEG-4 resources selected from the group including audio, video, and systems data. Then, decoding the MPEG-4 resources in Step 810 includes an action such as enhancing audio data in the MPEG-2 TS, enhancing video data in the MPEG-2 TS, or using the systems data to establish an interactive audiovisual scene and communication link. In some aspects a further step, Step 814, establishes an interactive audiovisual scene and communication link in response to decoding MPEG-4 systems data.

In some aspects, receiving an MPEG-2 TS, with a packetized MHP OC, in Step 802 includes receiving a first MPEG-2 TS and a second MPEG-2 TS with a packetized MHP OC. Then, locating a URI in the TS in Step 804 includes retrieving a lid URI in the first MPEG-2 TS, and retrieving MPEG-4 resources from the MHP OC in Step 808 includes retrieving MPEG-4 resources from the second MPEG-2 TS MHP OC.

In one aspect, accessing an address in response to the URI in Step 804 includes additionally accessing an address such as a local cache address and/or a Web protocol identifier. Then, a further step, Step 816, retrieves MPEG-4 resources, in response to accessing the address, from a source selected from the group including a local cache and/or a website.

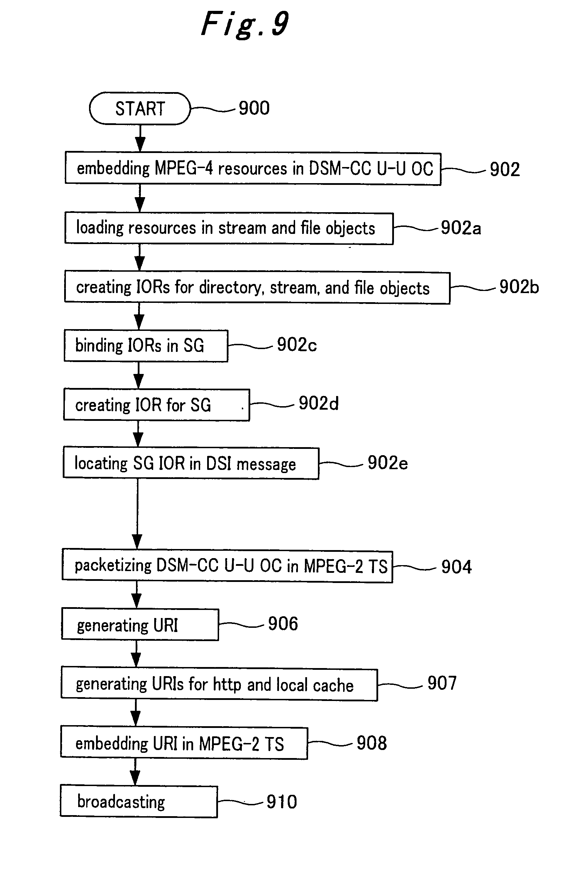

Fig. 9 is a flowchart illustrating the present invention method for broadcasting pointers to MPEG-4 data in a European Digital Video Broadcasting (DVB) network. The method begins at Step 900. Step 902 embeds MPEG-4 resources in an DSM-CC U-U OC. Step 904 packetizes the DSM-CC U-U OC in an MPEG-2 TS. Step 906 generates a URI for accessing MPEG-4 resources located at an address in the DSM-CC U-U OC. Step 908 embeds the URI in an MPEG-2 TS. Step 910 broadcasts the MPEG-2 TS, with the packetized DSM-CC U-U OC.

Typically, Step 906 generates a URI such as an http address and/or a local identifier (lid). In one aspect, a further step, Step 907, generates additional URI addresses such as http and local (receiver) cache addresses for accessing MPEG-4 resources from a website and a local (receiver) cache, respectively.

In one example of Step 906, a lid URI can be generated to supply a binding name and access scheme to objects in the DSM-CC U-U OC, as constrained and proscribed by MHP (MHP OC). Further, a generated lid URI may be embedded in an Initial Object Descriptor (IOD) to locate resources in the MHP OC such as a BIFS scene description stream and/or an object descriptor stream.

Embedding MPEG-4 resources in an MHP OC in Step 902 includes forming the MPEG-4 resources hierarchical directory structure of BIOP objects including a DSM::ServiceGateway, a DSM::Directory, DSM::Stream, and a DSM::File. In some aspects, Step 902 includes substeps. Step 902a loads the MPEG-4 resources into File and Stream objects. Step 902b creates IORs for Directory, Stream, and File Objects. Step 902c binds the IORs in a Service Gateway. Step 902d creates an IOR for the Service Gateway. Step 902e locates the Service Gateway IOR in a DSI message.

In one aspect, embedding MPEG-4 resources in an MHP OC (Step 902) includes embedding MPEG-4 resources such as audio, video, and/or systems data, that can be used for a purpose such as enhancing audio data in the MPEG-2 TS, enhancing video data in the MPEG-2 TS, and/or systems data for the establishment of an interactive audiovisual scene and communication link.

In other aspects, embedding the URI in an MPEG-2 TS in Step 908 includes locating a lid URI in a first MPEG-2 TS, and packetizing the MHP OC in an MPEG-2 TS in Step 908 includes packetizing the MPEG-4 resources in an MHP OC carried by a second MPEG-2 TS. Then, Step 910 broadcasts the first and second MPEG-2 TSs.

Systems and methods have been provided for using a URI, embedded in an MPEG-2 TS, to access MPEG-4 resources. A few examples have been given of how the URIs can be used, but these examples are not an exhaustive list. Likewise, examples have been given for MPEG-4 resource locations, but other locations are possible. Other variations and embodiments will occur to those skilled in the art.

## Claims

1. A method for receiving of MPEG-4 data resources broadcast in a European Digital Video Broadcasting (DVB) network, the method comprising:
at a DVB-Multimedia Home Platform (MHP) terminal, receiving an MPEG-2 Transport Stream (TS), with a packetized DSM-CC User-to-User (U-U) Object Carousel (OC);
locating a universal resources identifier (URI) in the TS;
in response to the URI, accessing an address in the DSM-CC U-U OC;
in response to accessing the address, retrieving MPEG-4 resources from the DSM-CC U-U OC; and,
decoding the MPEG-4 resources.

2. The method of claim 1 wherein accessing an address in response to the URI includes accessing an address selected from the group including a local identifier (lid) and an http address in the DSM-CC U-U OC.

3. The method of claim 2 wherein accessing an address includes accessing a lid URI providing a binding name and access scheme to the objects in the DSM-CC U-U OC, as prescribed and restricted by MHP protocols (MHP OC).

4. The method of claim 3 wherein using lid URIs to provide a binding name and access scheme to the objects in the MHP OC includes using a lid URI embedded in an Initial Object Descriptor (IOD) to locate resources in the MHP OC selected from the group including a BIFS scene description stream and an object descriptor stream.

5. The method of claim 4 wherein receiving an MPEG-2 TS, with a packetized MHP OC, includes forming MPEG-4 resources in a hierarchical directory structure.

6. The method of claim 5 wherein forming a hierarchical directory structure includes forming a hierarchical directory structure of BIOP objects including a DSM::ServiceGateway, a DSM::Directory, DSM::Stream, and a DSM::File.

7. The method of claim 6 wherein retrieving MPEG-4 resources from the MHP O C, in response to accessing the address, includes:
locating a DSI message;
extracting the IOR for the Service Gateway;
parsing the Service Gateway object;
extracting IORs for Directory, Stream, and File objects from the Service Gateway binding structure; and,
acquiring MPEG-4 resources from the Stream and File objects.

8. The method of claim 3 wherein receiving an MPEG-2 TS, with a packetized MHP OC, includes receiving a first MPEG-2 TS and a second MPEG-2 TS with a packetized MHP OC;
wherein locating a URI in the TS includes retrieving a lid URI in the first MPEG-2 TS; and,
wherein retrieving MPEG-4 resources from the MHP OC, in response to accessing the lid URI, includes retrieving MPEG-4 resources from the second MPEG-2 TS MHP OC.

9. The method of claim 1 wherein retrieving MPEG-4 resources from MHP OC, in response to accessing the address, includes retrieving MPEG-4 resources selected from the group including audio, video, and systems data.

10. The method of claim 9 wherein decoding the MPEG-4 resources includes an action selected from the group including enhancing audio data in the MPEG-2 TS, enhancing video data in the MPEG-2 TS, and using the systems data to establish an interactive audiovisual scene and communication link.

11. The method of claim 10 further comprising:
establishing an interactive audiovisual scene and communication link in response to decoding MPEG-4 systems data.

12. The method of claim 1 further comprising:
caching the retrieved MPEG-4 resources.

13. The method of claim 3 wherein accessing an address in response to the URI includes additionally accessing an address selected from the group including a local cache address and a Web protocol identifier; and,
the method further comprising:
retrieving MPEG-4 resources, in response to accessing the address, from a source selected from the group including a local cache and a website.

14. A method for broadcasting pointers to MPEG-4 data in a European Digital Video Broadcasting (DVB) network, the method comprising:
embedding MPEG-4 resources in an DSM-CC User-to-User (U-U) Object Carousel (OC);
packetizing the DSM-CC U-U OC in an MPEG-2 transport stream (TS);
generating a universal resource identifier (URI) for accessing MPEG-4 resources located at an address in the DSM-CC U-U OC;
embedding the URI in an MPEG-2 TS; and,
broadcasting the MPEG-2 TS, with the packetized DSM-CC U-U OC.

15. The method of claim 14 wherein generating a URI for accessing the MPEG-4 resources includes generating a URI selected from the group including an http address and a local identifier (lid).

16. The method of claim 15 wherein generating a URI for accessing MPEG-4 resources located at an address includes generating a lid URI to supply a binding name and access scheme to objects in the DSM-CC U-U OC, as prescribed and restricted by MHP protocols (MHP OC).

17. The method of claim 16 wherein generating a lid URI to supply a binding name and access scheme to objects in the MHP OC includes generating a lid URI embedded in an Initial Object Descriptor (IOD) to locate resources in the MHP OC selected from the group including a BIFS scene description stream and an object descriptor stream.

18. The method of claim 17 wherein embedding MPEG-4 resources in an MHP OC includes forming the MPEG-4 resources hierarchical directory structure.

19. The method of claim 18 wherein forming a hierarchical directory structure includes forming a hierarchical directory structure of BIOP objects including a DSM::ServiceGateway, a DSM::Directory, DSM::Stream, and a DSM::File.

20. The method of claim 19 wherein embedding MPEG-4 resources in the MHP OC includes:
loading the MPEG-4 resources into File and Stream objects;
creating IORs for Directory, Stream, and File Objects;
binding the IORs in a Service Gateway;
creating an IOR for the Service Gateway; and,
locating the Service Gateway IOR in a DSI message.

21. The method of claim 17 wherein embedding the URI in an MPEG-2 TS includes locating a lid URI in a first MPEG-2 TS;
wherein packetizing the MHP OC in an MPEG-2 TS includes packetizing the MPEG-4 resources in an MHP OC carried by a second MPEG-2 TS; and,
wherein broadcasting the MPEG-2 TS includes broadcasting the first and second MPEG-2 TSs.

22. The method of claim 14 wherein embedding MPEG-4 resources in an MHP OC includes embedding MPEG-4 resources selected from the group including audio, video, and systems data.

23. The method of claim 22 wherein embedding MPEG-4 resources in an MHP OC includes resources used for a purpose selected from the group including enhanced audio data in the MPEG-2 TS, enhanced video data in the MPEG-2 TS, and systems data for the establishment of an interactive audiovisual scene and communication link.

24. The method of claim 14 further comprising:
generating additional URI addresses selected from the group including http and local (receiver) cache addresses for accessing MPEG-4 resources from a website and a local (receiver) cache, respectively.

25. A European Digital Video Broadcasting (DVB) Multimedia Home Platform (MHP) terminal for receiving broadcast MPEG-4 data resources, the system comprising:
a receiver having an interface for accepting an MPEG-2 transport stream (TS) with an embedded uniform resource indicator (URI) and a packetized DSM-CC User-to-User (U-U) Object Carousel (OC);
an address access unit having an interface to accept the MPEG-2 TS from the receiver, the address access unit locating a URI in the TS, accessing an address, and retrieving MPEG-4 resources from the DSM-CC U-U OC; and,
a decoder having an interface connected to the address access unit for receiving the MPEG-4 resources and an interface for supplying decoded MPEG-4 information.

26. The system of claim 25 wherein the address access unit locates a URI selected from the group including an http address and a local identifier (lid).

27. The system of claim 26 wherein the address access unit accesses a lid URI providing a binding name and access scheme to objects in the DSM-CC U-U OC, as prescribed and restricted by MHP protocols (MHP OC).

28. The system of claim 27 wherein the address access unit uses a lid URI embedded in an Initial Object Descriptor (IOD) to locate resources in the MHP OC selected from the group including a BIFS scene description stream and an object descriptor stream.

29. The system of claim 28 wherein the address access unit accesses MPEG-4 resources in a hierarchical directory.

30. The system of claim 29 wherein the address access unit forms a hierarchical directory structure of BIOP objects including a DSM::ServiceGateway, a DSM::Directory, a DSM::Stream, and a DSM::File.

31. The system of claim 30 wherein the address access unit retrieves MPEG-4 resources from the MHP OC as follows:
locating a DSI message;
extracting the IOR for the Service Gateway;
parsing the Service Gateway object;
extracting IORs for Directory, Stream, and File objects from the Service Gateway binding structure; and,
acquiring MPEG-4 resources from the Stream and File objects.

32. The system of claim 27 wherein the receiver receives a first MPEG-2 TS and a second MPEG-2 TS with a packetized MHP OC;
wherein the address access unit retrieves the lid URI from the first MPEG-2 TS, and retrieves MPEG-4 resources from the MHP OC in the second MPEG-2 TS.

33. The system of claim 25 wherein the address access unit retrieves MPEG-4 resources selected from the group including audio, video, and systems data.

34. The system of claim 35 wherein the decoder supplies MPEG-4 information selected from the group including enhancing audio data in the MPEG-2 TS, enhancing video data in the MPEG-2 TS, and using the systems data to establish an interactive audiovisual scene and communication link.

35. The system of claim 34 further comprising:
a transmitter having a transmit interface; and,
wherein the transmitter and receiver form an interactive audiovisual scene and communication link in response to decoding MPEG-4 systems data.

36. The system of claim 25 further comprising:
a local cache have an interface to receive retrieved MPEG-4 resources for storage.

37. The system of claim 26 wherein the address access unit accesses an address selected from the group including a local cache address and a Web protocol identifier, and retrieves MPEG-4 resources, in response to accessing the address, from a source selected from the group including a local cache and a network-connected website.

38. A European Digital Video Broadcasting (DVB) system for transmitting MPEG-4 resources, the system comprising:
an address pointer unit (APU) having an interface to supply an MPEG-2 transport stream (TS) with uniform resource identifiers (URIs) for accessing MPEG-4 resources embedded in an DSM-CC User-to-User (U-U) Object Carousel (OC), and to supply a MPEG-2 TS with the packetized DSM-CC U-U OC; and,
a transmitter having an interface to accept the MPEG-2 TS, with the packetized DSM-CC U-U OC from the address pointer unit, and an interface to broadcast the MPEG-2 TS.

39. The system of claim 38 wherein the APU supplies an MPEG-2 TS with a URI selected from the group including an http address and a local identifier (lid).

40. The system of claim 39 wherein the APU generates a lid URI to supply a binding name and access scheme to objects in the DSM-CC U-U OC, as prescribed and restricted by MHP protocols (MHP OC).

41. The system of claim 40 wherein the APU generates a lid URI embedded in an Initial Object Descriptor (IOD) to locate resources in the MHP OC selected from the group including a BIFS scene description stream and an object descriptor stream.

42. The system of claim 41 wherein the APU embeds MPEG-4 resources in an MHP OC by forming the MPEG-4 resources in a hierarchical directory structure.

43. The system of claim 42 wherein the APU forms a hierarchical directory structure of BIOP objects including a DSM::ServiceGateway, a DSM::Directory, a DSM::Stream, and a DSM::File.

44. The system of claim 43 wherein the APU embeds MPEG-4 resources in the MHP OC as follows:
loading the MPEG-4 resources into File and Stream objects;
creating IORs for Directory, Stream, and File Objects;
binding the IORs in a Service Gateway;
creating an IOR for the Service Gateway; and,
locating the Service Gateway IOR in a DSI message.

45. The system of claim 39 wherein the APU locates a lid URI in a first MPEG-2 TS and embeds MPEG-4 resources in an MHP OC packetized in a second MPEG-2 TS; and,
wherein the transmitter broadcasts the first and second MPEG-2 TSs.

46. The system of claim 38 wherein the APU embeds MPEG-4 resources in an MHP OC selected from the group including audio, video, and systems data.

47. The system of claim 38 wherein the APU generates additional URI addresses embedded in the MPEG-2 TS selected from including http and local (receiver) cache addresses for accessing MPEG-4 resources from a website and a local (receiver) cache, respectively.
